# EUROPEAN PATENT APPLICATION

(11) **EP 2 391 103 A1**
(43) Date of publication of application: **30.11.2011**
(21) Application number: 10305544.8
(22) Date of filing: 25.05.2010
(51) Int. Cl.: H04M 1/725, G02B 27/01, G06F 17/30, G06T 17/00, G06F 3/01, H04M 1/05, H04B 1/38

(54) **A method of augmenting a digital image, corresponding computer program product, and data storage device therefor**

(71) Applicant: Alcatel Lucent, 75007 Paris (FR)
(72) Inventor: Drewniok, Marc, 73728, Esslingen (DE); Rohrmann, Martin, 70435, Stuttgart (DE); Michaelis, Volkhard, 20097, Hamburg (DE); Peikert, Cindy, 70199, Stuttgart (DE); Sterl, Mike, 70825, Korntal-Münchingen (DE)
(74) Representative: Kleinbub, Oliver

(57) **Abstract**

The invention concerns a method of augmenting a digital image, the method comprising the steps of acquiring (101) the digital image, deriving (102) image data representative of the digital image, transmitting (103) the image data to a server, receiving (104) media information from the server, and augmenting (105) the digital image with computer-generated imagery based on the media information. The invention further concerns a computer program product and a device therefor.

## Description

### Field of the Invention

The invention relates to a method of augmenting a digital image, the method comprising the steps of acquiring the digital image, deriving image data representative of the digital image, transmitting the image data to a server, receiving media information from the server, and augmenting the digital image with computer-generated imagery based on the media information. The invention further relates to a computer program product comprising computer-executable instructions for performing said method when the program is run on a computer, and to a device programmed or configured to perform said method.

### Background

In the context of multimodal interaction, the term "mediated reality" refers to the ability to add to, subtract information from, or otherwise manipulate one's perception of reality through the use of a wearable computer or hand-held device. In the specific case where the user's visual perception of the environment is enhanced, the mediated reality is commonly referred to as an augmented reality (AR), that is, a live direct or indirect view of a physical real-world environment whose elements are augmented by virtual computer-generated imagery (CGI).

In "Telegeoinformatics: Location-Based computing and Services.", H. Karimi and A. Hammad (eds.), Taylor & Francis Books Ltd., 01/2004, Chapter Nine, the authors Tobias H. Höllerer and Steven K. Feiner discuss the potentials and possibilities of mobile AR systems.

A major downside of these known systems lies in their inadequacy for complex tasks such as object recognition or video processing.

### Summary

It is an objective of the invention to present an improved approach to mobile AR that strives to meet the requirements of computationally intensive and memory-intensive applications.

This objective, is achieved by a method of augmenting a digital image, the method comprising the steps of acquiring the digital image, deriving image data representative of the digital image, transmitting the image data to a server, receiving media information from the server, and augmenting the digital image with computer-generated imagery based on the media information. The objective further is achieved by a computer program product comprising computer-executable instructions for performing said method when the program is run on a computer, or by a device programmed or configured to perform said method.

A main idea of the invention is to offload the computationally and memory-intensive tasks associated with advanced AR techniques to a potentially remote server or group of servers.

Further developments of the invention can be gathered from the dependent claims and the following description.

In the following the invention will be explained further making reference to the attached drawing.

To augment a digital image according to an embodiment of the invention, the digital image, is first acquired. Thereupon, image data is derived that is representative of the digital image. This image data is transmitted to a server, from which server media information is received in return. Finally, the digital image is augmented with CGI based on the media information.

Consistently with the term's use in photography and optics, by digital image here is meant a discrete representation of a picture as used in computing. Also known as raster or bitmap images, digital images have a finite set of digital values called picture elements or pixels. The digital image contains a fixed number of rows and columns of pixels. Pixels are the smallest individual element in a digital image, holding quantized values that represent the brightness of a given color at any specific point.

### Brief Description of the Figures

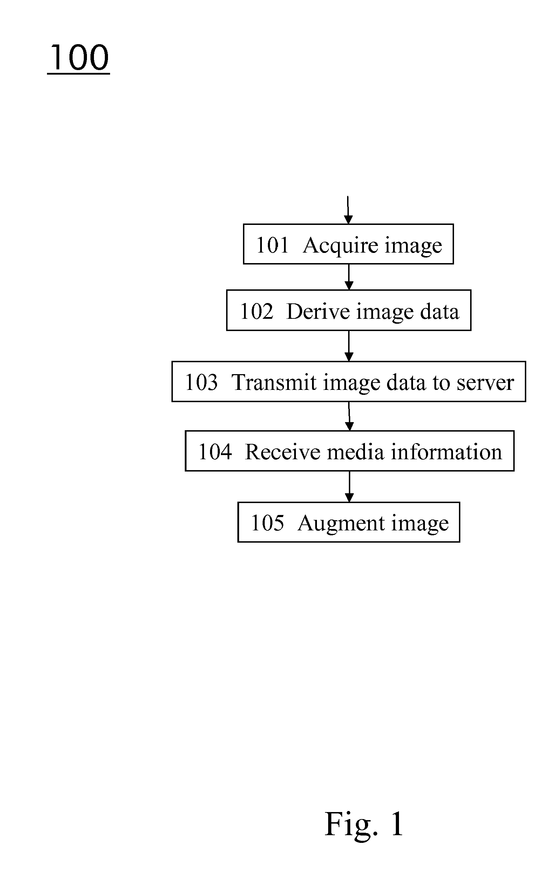

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, and a fifth processing step 105. A set of arrows-represents the flow of control passing through the processing steps 101 to 105. Within this flow, an arrow starting at a first symbol and ending at a second symbol indicates that control passes from the first symbol to the second symbol.

In the embodiment at hand, the method is applied by a network client. In computing, by client is meant an application or system that accesses a remote service on another computer system, known as a server, by way of a computer network. In this context, the term "computer network", often simply referred to as a network, signifies a collection of computers and devices connected by communications channels that facilitates communications among users and allows them to share resources with other users.

More specifically, the network client runs on a smartphone, that is, a mobile phone that offers more advanced computing ability and connectivity than a basic low-end mobile phone, sometimes called a feature phone. While some feature phones are able to run simple applications based on generic platforms such as the Java Platform, Micro Edition (Java ME) or the Binary Runtime Environment for Wireless (BREW), a smartphone allows the user to install and run much more advanced applications based on a specific platform. To allow the network client to execute, the smartphone used with this embodiment of the invention runs complete operating system software.

In a first processing step 101, the smartphone acquires a digital image. By digital image acquisition, sometimes called digital imaging, is meant the creation of the digital image, typically from a physical scene. The digital image may he created directly from the physical scene by a camera or similar device. In an alternative embodiment, it may be obtained from another image on an analog medium, such as a photograph, photographic film, or printed paper, by an image scanner or similar device. The digital image may further be acquired by complex processing of non-image data, such as output data of tomographic equipment, side-scan sonar, or a radio telescope. In the art of digital imaging, such digitalization of analog real-world data is also known as digitizing.

In the second step 102, the smartphone derives image data representative of the digital image acquired in the first step 101. Each pixel of the image is typically associated to a specific position in a two-dimensional region and assigned a value consisting of one or more quantities or samples related to that position. To allow for an adequate level of control and accuracy throughout the subsequent steps, the smartphone makes use of a raw image format, that is, a format that represents the captured image in its entirety and devoid of any additional processing.

In an optional step (not depicted), to assert certain assumptions implied by the method, the smartphone pre-processes the image data. Such pre-processing may include, inter alia, re-sampling of the image data to ensure that the image coordinate system is correct, noise reduction to make certain that sensor noise does not introduce false information, contrast enhancement to ensure that relevant information can be detected, and scale-space representation to enhance the contained image structures at locally appropriate scales.

In a further optional step (not depicted), to guarantee that the image data outlives the execution of the program that created it in the second step 102, the smartphone saves that data to non-volatile storage such as its hard drive or flash memory, To further minimize redundancy for storage or transmission of the image data in an efficient form, the smartphone optionally makes use of image compression, that is, applies data compressian to the image data to reduce its size.

In the third processing step 103, the smartphone transmits the image data derived in the second processing step 102 to a server. Prior to or along with the image data, the smartphone, through a central server interface, requests the server to start an application for processing the image data transmitted. To this end, the server comprises a management module.

To reduce capital expenditure, the application makes use of cloud computing, that is, Internet-based computing, whereby shared resources, software and information are provided to the server on demand, similar to an electricity grid. In this context, the term "cloud" is used as a metaphor for the Internet. Details of the image processing are abstracted from the smartphone, which, no longer has need of or control over the cloud computing infrastructure that supports it. In accordance with the term's connotation in electrical engineering and computer science, by image processing is meant any form of signal processing applied to the image data.

For a rapid and inexpensive re-provisioning of the shared resources, the cloud computing infrastructure comprises a plurality of servers in addition to the one providing the central server interface. To isolate the application from any other process in execution, each server in turn runs a plurality of virtual machines (VMs), that is, software implementations of a computer that execute the application like a physical machine. To further allow each server to share its underlying physical machine resources between the different VMs, these VMs take the form of system VMs, sometimes called hardware VMs, that is, they provide complete system platforms supporting the execution of an entire operating system (OS). The software layer providing the virtualization is known as a virtual machine monitor or hypervisor. In an alternative embodiment, to reduce the resource requirements imposed on the physical machine by multiple OS instances, the VMs may take the form of process VMs, sometimes called application VMs, which by definition run as regular application inside a common OS.

In order to provide an immediate response to the smartphone, the application may reasonably be expected to be relatively short-lived. This assumption allows each server to share its physical machine resources among a high number of applications, leading to an efficient use of the cloud computing infrastructure. Also, in the case where several start requests are received from a single smartphone, the requested applications may be spread evenly among the cloud computing infrastructure instead of being collocated on a single server.

Upon receiving a start request, the management module deploys the requested application on one or more of the servers, taking into account the latency, bandwidth, and envisaged packet loss between the elect server(s) and smartphone. In the field of telephony, such a set of requirements on the collective behavior of objects is known as quality of service. (QoS). The serverslection further depends on the access network to which the smartphone is currently subscribed, that is, that part of the telecommunications network which connects the smartphone to its immediate service provider. Since the smartphone is part of a mobile telecommunications system implementing radio access technology, the access network takes the form of a mobile access network, also known as a radio access network (RAN). In this context, the smartphone is varyingly called user equipment (UE), terminal equipment, or mobile station (MS), depending on the type of RAN employed. Examples of suitable RANs include, but are not limited to, a Global System for Mobile Communications (GSM) network, GSM EDGE Radio Access Network (GERAN), Universal Mobile Telecommunications System (UMTS) network, UMTS Terrestrial Radio Access Network (UTRAN), Code division multiple access 2000 (CDMA2000) network, 1x Evolution-Data Optimized (1xEVDO) network, IEEE 802.11 (Wi-Fi) net.work, or worldwide Interoperability for Microwave Access (WiMAX) network. In accordance with the term's connotation in software engineering, by deployment are meant all of the activities that collectively make the application available for use by the smartphone.

To achieve the aforementioned QoS objectives, the cloud computing infrastructure is preferably embedded into the RAN, allowing for a connection between the smartphone and associated server without using additional connections of the core network. By core network, sometimes called network core, is meant the central part of the telecommunications network used to route telephone calls across the public switched telephone network (PSTN).

To derive a set of characteristics or parameters related to the digital image, the cloud, inter alia, performs object recognition on the transmitted image data. In computer vision, by object recognition, is meant the task of finding a given object in an image or video sequence.

In the fourth processing step 104, the smartphone, in response to the image data transmitted in the third processing step 103, receives media information from the server. Such media information may comprise the aforementioned characteristics and parameters, leaving it to the smartphone to generate appropriate CGI. To relieve the smartphone of this task either partly or entirely, the media information may also comprise the envisaged CGI itself, the latter having been generated by means of the cloud computing infrastructure. Such approach is especially advantageous if the CGI is to be based on a model, that is, a description of one or more three-dimensional objects in a strictly defined language or data structure. In this case, the process of generating the CGI from the model in the cloud is known as rendering. Since the CGI is not rendered in real time by the smartphone, but by means of the potentially more powerful cloud computing infrastructure, the process is more specifically known as pre-rendering.

Finally, in the fifth processing step 105, the smartphone augments the digital image with CGI based on the media information received in the fourth processing step 104. To allow for an immediate presentation of the AR to an end user of the smartphone, the augmentation is performed in real time. Typically, the augmentation is in semantic context with the environmental object identified, such as by giving the name of a person depicted in the image.

To present the merged view to the end user, the smartphone is equipped with a handheld display. The smartphone employs video see-through technology to overlay the graphical information to the physical world. Given the ubiquitous nature of camera- and display-equipped smartphones, a further benefit of the invention is its applicability to these popular devices, Preferably, a smartphone for use with an embodiment of the invention is further equipped with an accelerometer, global positioning system, or solid-state compass, all of which can be beneficial in providing location and direction information to support object recognition in the cloud.

To achieve an even more immersive end-user experience, a device according to an alternative embodiment of the invention may make use of a head-mounted or helmet-mounted display (HMD) instead of a handheld display. By HMD is meant any display device worn on the head or as part of a helmet comprising a display optic in front of one or each of the user's eyes.

It is to be understood that a mobile device other than a smartphone can be employed as a platform for the network client. In the context of information appliances, a mobile device, also known as cellphone device, handheld device, handheld computer, palmtop, or simply handheld, is any pocket-sized computing device, typically having a display screen with touch input or a miniature keyboard. Instead of a mobile phone, the mobile device may take the form of a mobile computer, personal digital assistant (PDA), enterprise digital assistant (EDA), graphing calculator, handheld game console, digital still camera (DSC), digital video camera (DVC or digital camcorder), portable media player, e-book reader, pager, or personal navigation device (PND).

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of augmenting a digital image, the method comprising the steps of
acquiring (101) the digital image,
deriving (102) image data representative of the digital image,
transmitting (103) the image data to a server, receiving (104) media information from the server, and augmenting (105) the digital image with computer-generated imagery based on the media information.

2. A method according to claim 1, **characterized in that** the method comprises the further step of generating a merged view of the digital image and the computer-generated imagery.

3. A method according to claim 2, **characterized in that** the method comprises the further step of presenting the view to an end user.

4. A method according to claim 3, **characterized in that** the view is presented by means of a head-mounted display.

5. A method according to claim 3, **characterized in that** the merged view is generated by superimposing the computer-generated imagery upon a real-world view of the end user.

6. A method according to any of the preceding claims, **characterized in that** the method comprises the further step of submitting a management request to the server.

7. A method according to any of the preceding claims, **characterized in that** the server forms part of a cloud computing infrastructure, wherein the image data is transmitted (103) to the server and the media information is received from the server by means of the Internet.

8. A computer program product comprising computer-executable instructions for performing a method when the program is run on a computer, the method comprising the steps of
acquiring (101) a digital image,
deriving (102) image data representative of the digital image,
transmitting (103) the image data to a server, receiving (104) media information from the server, and augmenting (105) the digital image with computer-generated imagery based on the media information.

9. A device programmed or configured to perform a method comprising the steps of
acquiring (101) a digital image,
deriving (102) image data representative of the digital image,
transmitting (103) the image data to a server, receiving (104) media information from the server, and augmenting (105) the digital image with computer-generated imagery based on the media information.

10. A device according to claim 9, **characterised in that** the device is a smartphone.
